# EUROPEAN PATENT SPECIFICATION

(11) **EP 0 388 945 B1**
(45) Date of publication and mention of the grant of the patent: **15.02.1995**
(21) Application number: 90105414.8
(22) Date of filing: 22.03.1990
(51) Int. Cl.: G02F 1/01, G06E 3/00, G02F 1/21

(54) **Method of correlating optical beams**
Verfahren zur Korrelation zwischen optischen Strahlenbündeln
Méthode de corrélation entre faisceaux optiques

(30) Priority: 24.03.1989 IT 6720889
(43) Date of publication of application: 26.09.1990
(73) Proprietor: CSELT Centro Studi e Laboratori Telecomunicazioni S.p.A., I-10148 Turin (IT)
(72) Inventor: Grego, Giorgio, Venaria (Torino) (IT)
(74) Representative: Riederer Freiherr von Paar zu Schönau, Anton

(56) References cited:
- APPLIED OPTICS.vol.26,no.18,15 September 1987,NEW YORK US pages 3762-3771;B.JAVIDI:'Real-time joint transform correlation by partially coherent readout illumination'
- ELECTRONICS LETTERS.vol.22,no.22,22 October 1986,ENAGE GB pages 1200-1202;M.G.NICHOLS ET AL.:'Image correlation via pulsed dynamic holography'

## Description

### A method of correlating Optical Beams

The present invention concerns a method used to precess optical signals in the field of optical computing and image recognition and more particularly it concerns a method of providing for the correlation between optical beams, i.e. of a pump beam having a first wavelength and a reading beam having a second wavelength, by combining these beams through one or more semitransparent mirrors and passing them together through a correlating window element, thereby obtaining at the output of the correlating window element a light beam carrying the correlation between the pump beam and the reading beam. Such correlation can e.g. be carrying out the product, a combinational processing effected between binary digits or digit matrices, a special intensity modulation or a Fourier transform.

Methods used in fully-optical devices implementing correlation functions between light beams are required in the domain of information processing by optical techniques.

Said operations prove particularly useful, e.g., whenever automatic image recognition by comparison with a much larger image or with a series of images is required. In this way a particular geographical area can be identified within a wide terrestrial or celestial area, the presence of a word in a text can be detected, et cetera. In said cases the comparison is generally made between two optical beams whose intensity is spatially modulated by the respective images or by their Fourier Transform and the recognition takes place in correspondence with the maximum of a correlation function detected by a suitable analyzer.

Also in the domain of information processing by optical computers, logical operations are to be effected between binary digit matrices transferred on optical beams, wherein the presence or absence of light at different points is associated with a different logic level. By spatial and/or time correlation between two beams of said kind the known logic functions AND, OR, etc can be obtained, by operating at the same time on a great number of parallel binary digits, and thus obtaining a big processing capacity.

Devices capable of carrying out the correlation between light beams are now well known, as the so-called LCLV (Liquid Crystal Light Valve) described in the paper "Digital Optical Computing" by Alexander A. Sawchuk et alii, issued in Proceedings of the IEEE, Vol. 72, No.7, July 1984. Said devices consist of a layer of semiconducting material CdS, forming a photoconducting surface, and of a liquid crystal surface, separated by an opaque layer, by a reflecting layer and by an insulating layer. Two external transparent and electroconducting surfaces allow the application of an a.c. biasing voltage. A light beam incident on the photoconducting surface causes a variation of the input impedance of this layer at different points proportionally to spatial light intensity distribution, and hence a variation of the voltage drop across the adjacent liquid crystal layer, thus obtaining a corresponding variation of crystal orientation. By sending towards the liquid crystal surface a polarized light beam, a reflected beam is obtained with polarization varying at different points in function of the liquid crystal rotation angle. If the reflected beam is examined by a suitable polarization analyzer, an intensity-modulated beam is obtained according to a beam incident onto the photoconducting surface. However, this device presents a number of limitations due both to the electro-optical conversion operated between the different layers, and to the use of liquid crystals. In fact the maximum spatial resolution is about 40 lines/mm and the response time is of 30 ms.

The disadvantages above are overcome by the method of carrying out the correlation between optical beams, provided by the present invention, which does not require any electrical biasing, allows a resolution near the maximum wavelength of the incident beams and has a response time near that of the electronic transitions between different atom energy levels.

The method of the present invention is characterized in that for the correlating window element, a window of a rare-earth doped glass is used having a highest energy level corresponding to the first wavelength and a transition corresponding to the second wavelength, between the intermediate energy level and the fundamental energy level of the rare-earth doped glass.

The foregoing and other characteristics of the present invention will be made clearer by the following description of a preferred embodiment of an arrangement for carrying out the method of the invention, given by way of non-limiting example, and with the annexed drawings wherein:
- Fig. 1 is a schematic representation of the arrangement;
- Fig. 2 shows a Mach-Zehnder interferometer using the arrangement of Fig. 1.

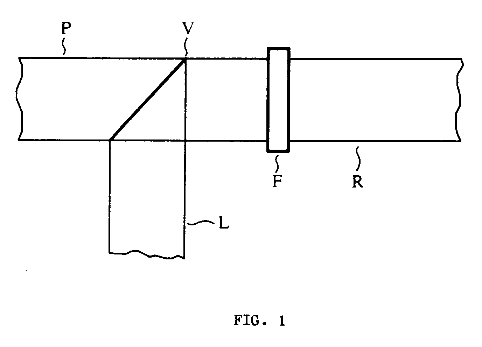

The arrangement shown in Fig. 1 uses a correlating window element F made of rare-earth doped glass. As known, such glasses are rare-earth doped silica, fluorozirconate glasses or the like, so-called "active glass", used to implement lasers and optical fibre amplifiers, as described e.g. in the paper entitled "Review of rare earth doped fibre lasers and amplifiers" by Paul Urquhart, issued on IEE Proceedings, Vol. 135, Pt.J. No. 6, December 1988. Said glasses, when illuminated by a light radiation at a certain wavelength, named pump radiation, present a fluorescence on a greater wavelength. In fact, pump radiation gives rise to transitions of the electrons present in active-glass moleculae from fundamental energy level to a higher energy level. Hence said electrons nonradiatively decay after a certain relaxing time to an intermediate level, with phonon creation. From said intermediate energy level the electrons radiatively decay to the fundamental energy level emitting lower energy photons. If the number of electrons at the fundamental state is higher than that at the excited state, an incident photon with energy corresponding to energetic gap of de-excitation can be absorbed, with consequent attenuation of transiting light beam, if, however, the number of the electrons at the excited state is higher than the number of electrons at the fundamental state, i.e. if a population inversion has taken place, the transiting light beam can be amplified. Of course, if a population balance exists, the rare-earth doped glass is perfectly transparent. It is also possible to obtain said glasses with materials wherein two intermediate levels instead of one exist, which require lower pump energy.

Window element F made of rare-earth doped glass is illuminated at the same time by pump, or writing, beam P and by reading beam L through a semitransparent mirror V. Of course, beam P consists of radiations with a wavelength corresponding to pumping wavelength and beam L of radiations with a wavelength corresponding to that of the transition between intermediate and fundamental energy levels. As a function of spatial power distribution of writing beam P, the spatial transmittance of correlating window element F passes from minimum values, with correspondent attenuation, to higher values, till perfect transparency and possibly amplification is obtained. Power levels allowing amplification are not required, but a certain degree of transmittance variation is sufficient to modulate reading beam L by writing beam P and hence to obtain at window element F output a light beam R carrying the correlation between the other two beams L and P. Said resulting beam can then be sent to a suitable optical system, to a Fourier filter or to an analyzer, according to the domain of use of the device.

This arrangement can be used in a Mach-Zehnder interferometer to obtain a phase-shift of variable entity of one of the two interfering light beams.

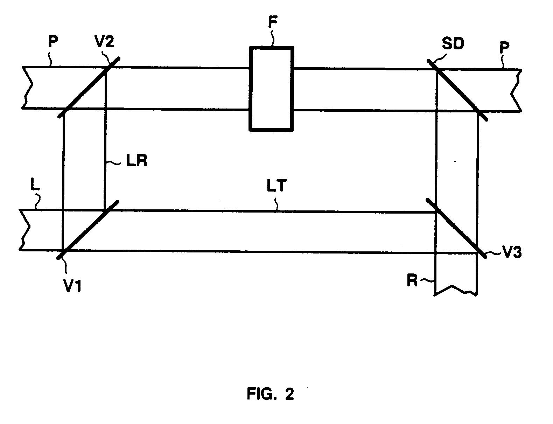

In the scheme of such interferometer, shown in Fig. 2, the reading beam L is sent towards a semi-transparent mirror V1, which reflects a part LR towards a second semi-transparent mirror V2, which in turn reflects it towards window element F. Also a pump beam P transits through semitransparent mirror V2 and impinges upon the surface of the window element F. In function of the optical power of the pump beam, transparency characteristics of window element F change, passing, as seen, from attenuation to amplification. Said variations are fully equivalent to refractive index variations, and hence to variations of the optical path, which as known is given by the product of the refractive index by the thickness of the window element F. A variation of the optical path causes a variation of the phase of the wave front of the reading beam outgoing from F, which phase depends on the pump beam power.

At the output from window element F a dichroic mirror SD allows pump beam P to pass undisturbed, since it is no longer necessary, and the reading beam to be reflected towards a third semi-transparent mirror V3, whereto also part LT of original beam L arrives without undergoing phase shifts. Mirror V3 is oriented so as to produce interference between the reading beam which has not been phase-shifted and the one which has been phase-shifted by window element F. Hence the resulting beam R will present maximum intensity if phase-shift between the interfering beams is an even multiple of 180° and minimum intensity if phase-shift is equal to an odd multiple of 180°. Then an intensity-modulation is obtained of the resulting beam R which is dependent on intensity of pump beam P. In the case in which the pump beam presents spatial intensity variations, the resulting beam will also present analogous variations, while if both beams P and L present spatial intensity variations, the resulting beam will present a spatial intensity modulation which is the correlation of intensities of beams P and L.

It is clear that what described has been given only by way of non-limiting example. Variations and modifications are possible without going out of the scope of claims. For instance, the correlation can be performed between more than two beams, causing them to impinge upon the correlating window element after being duly directioned by a plurality of semitransparent mirrors placed in series.

## Claims

1. Method of correlating optical beams, i.e. a pump beam having a first wavelength and a reading beam having a second wavelength, by combining these beams through one or more semitransparent mirrors and passing them together through a correlating window element, thereby obtaining at the output of the correlating window element a light beam carrying the correlation between the pump beam and the reading beam, characterized in that for the correlating window element, a window of a rare-earth doped glass is used having a highest energy level corresponding to the first wavelength and a transition corresponding to the second wavelength, between the intermediate energy level and the fundamental energy level of the rare-earth doped glass.

2. Method as in claim 1, characterized in that the pump beam (P) is used with such a power that the spatial transmittance of the correlating window element (F) passes from minimum values, in correspondence of which there is attenuation, to higher values, until a perfect transparency is attained.

3. Method as in claim 1, characterized in that the pump beam (P) is used with such a power that the spatial transmittance of the correlating window element (F) passes from minimum values, in correspondance of which there is attenuation, to higher values, until optical amplification is reached.

4. Method as in any of claims 1 to 3, characterized in that by the use of an interferometer, in function of the power of the pump beam (P) the phase of the wave front of a part (LR) of the reading beam (L) is shifted, which is then made to interfere with the other part (LT) of the reading beam (L) with unshifted phase, thus obtaining a resulting beam (R) whose spatial intensity depends on the intensity of the pump beam (P).

## Patentansprüche

1. Verfahren zum Korrelieren optischer Strahlenbündel, nämlich eines Pumpbündels mit einer ersten Wellenlänge und eines Lesebündels mit einer zweiten Wellenlänge, durch Kombinieren dieser Bündel über einen oder mehrere halbdurchlässige Spiegel und gemeinsames Hindurchleiten der Bündel durch ein korrelierendes Fensterelement, wodurch man am Ausgang des korrelierenden Fensterelements ein Lichtbündel mit der Korrelation zwischen dem Pumpbündel und dem Lesebündel erhält, dadurch gekennzeichnet, daß man als korrelierendes Fensterelement ein Fenster aus mit Seltenerde dotiertem Glas verwendet, das einen höchsten Energiepegel entsprechend der ersten Wellenlänge und einen Übergang entsprechend der zweiten Wellenlänge zwischen dem Energie-Zwischenpegel und dem Energie-Grundpegel des mit Seltenerde dotierten Glases hat.

2. Verfahren nach Anspruch 1, dadurch gekennzeichnet, daß man das Pumpbündel (P) mit einer solchen Leistung einsetzt, daß der räumliche Transmissionsgrad des korrelierenden Fensterelements (F) von Minimumwerten, in Übereinstimmung mit denen es Dämpfung gibt, zu höheren Werten, bis eine vollständige Transparenz erreicht ist, übergeht.

3. Verfahren nach Anspruch 1, dadurch gekennzeichnet, daß man das Pumpbündel (P) mit einer solchen Leistung einsetzt, daß der räumliche Transmissionsgrad des korrelierenden Fensterelements (F) von Minimumwerten, in Übereinstimmung mit denen es Dämpfung gibt, zu höheren Werten, bis eine optische Verstärkung erreicht ist, übergeht.

4. Verfahren nach einem der Ansprüche 1 bis 3, dadurch gekennzeichnet, daß man durch die Verwendung eines Interferometers die Phase der Wellenfront eines Teils (LR) des Lesebündels (L) in Funktion von der Leistung des Pumpbündels (P) verschiebt und dann diesen Teil (LR) mit dem anderen Teil (LT) des Lesebündels (L) mit unverschobener Phase zur Interferenz bringt und hierdurch ein resultierendes Bündel (R) erhält, dessen räumliche Lichtstärke von der Lichtstärke des Pumpbündels (P) abhängt.

## Revendications

1. Méthode pour corréler des faisceaux optiques, à savoir un faisceau de pompage ayant une première longueur d'onde et un faisceau de lecture ayant une deuxième longueur d'onde, en combinant ces faisceaux au moyen d'un ou de plusieurs miroirs semi-transparents et en les faisant passer à travers un élément de corrélation à fenêtre, en obtenant à la sortie de l'élément de corrélation à fenêtre un faisceau lumineux portant la corrélation entre le faisceau de pompage et le faisceau de lecture, caractérisé en ce que comme élément de corrélation à fenêtre on utilise une fenêtre en verre dopé avec des terres rares qui présente un niveau énergétique supérieur correspondant à la première longueur d'onde et une transition correspondant à la deuxième longueur d'onde, entre le niveau énergétique intermédiaire et le niveau énergétique fondamental du verre dopé avec des terres rares.

2. Méthode comme dans la revendication 1, caractérisée en ce que le faisceau de pompage (P) est utilisé avec une telle puissance que la transmittance point à point de l'élément de corrélation à fenêtre (F) passe des valeurs minimums, en correspondance desquelles il y a une atténuation, à des valeurs supérieures, jusqu'à atteindre la transparence parfaite.

3. Méthode comme dans la revendication 1, caractérisée en ce que le faisceau de pompage (P) est utilisé avec une telle puissance que la transmittance point à point de l'élément de corrélation à fenêtre (F) passe des valeurs minimums, en correspondance desquelles il y a une atténuation, à des valeurs supérieures, jusqu'à atteindre l'amplification optique.

4. Méthode comme dans une quelconque des revendications de 1 à 3, caractérisée en ce que en utilisant un interféromètre, en fonction de la puissance du faisceau de pompage (P), on varie la phase du front d'onde d'une partie (LR) du faisceau de lecture (L), que l'on fait ensuite interférer avec l'autre partie (LT) du faisceau de lecture (L) non déphasé, en obtenant un faisceau résultant (R) dont l'intensité spatiale dépend de l'intensité du faisceau de pompage (P).
